# EUROPEAN PATENT SPECIFICATION

(11) **EP 1 353 014 B1**
(45) Date of publication and mention of the grant of the patent: **20.02.2008**
(21) Application number: 03008442.0
(22) Date of filing: 11.04.2003
(51) Int. Cl.: E03D 1/32

(54) **Fast-close feed valve for a lavatory flush tank**
Schnellschliessendes Einlassventil für einen Toilettenspülkasten
Soupape à fermeture rapide pour un réservoir de chasse d'eau

(30) Priority: 12.04.2002 IT MI20020788
(43) Date of publication of application: 15.10.2003
(73) Proprietor: Oliveira & Irmao S.A., 3800 Aveiro (PT)
(72) Inventor: Moura de Oliveira, Antonio Manuel, 3800 Aveiro (PT)
(74) Representative: Cerbaro, Elena

(56) References cited:
- EP-A- 1 270 830
- WO-A-99/54562
- GB-A- 1 161 255
- US-A- 6 123 099

## Description

The present invention relates to a fast-close feed valve for lavatory flush tanks.

As is known, lavatory flush tanks are fitted with feed valves connected to the water mains, and the most commonly used types of which substantially comprise a metal fitting for connection to the water mains, a valve assembly housed inside a casing, and a movable float controlling a shutter member on the valve assembly. The valve assembly may be a direct piston-close type (in which the float-controlled shutter member acts directly on the mains nozzle) or a counterpressure-close type (in which the shutter member acts on a service nozzle closing a counterpressure chamber).

In both cases, the valve assembly should close quickly and accurately when the water in the tank reaches a given level. For this reason, the float is not normally housed inside the tank itself, but inside a vessel having a top opening and in turn housed inside the tank, so that the opening is located at the given water level at which the valve assembly is to close.

When the tank begins to fill up, the water level inside the tank therefore rises without lifting the float; once the given level is reached, the water flows over into the vessel through the top opening, and gradually raises the float until the valve assembly closes; and, in the meantime, the water level outside the vessel remains substantially unchanged at said given level.

Known feed valves, however, are not without drawbacks. Firstly, the force exerted by the float on the valve assembly shutter increases gradually as the water level in the vessel rises; and, though the vessel housing the float fills up faster than the tank as a whole, the float fails to exert the instantaneous thrust required to counteract the water mains operating pressure, so the valve assembly does not close immediately.

Secondly, using a vessel increases the size and complexity of the feed valve. That is, in addition to normal actuating mechanisms, a device must be provided to also empty the float vessel at each flushing operation, otherwise the valve assembly would remain closed.

WO-A 99 54562 discloses an inlet valve for controlling the flow of fluid, that includes a movable valve member, operable between an open position and a closed position, and a first actuating member, movable under the influence of buoyancy to an intermediate position where it is pre-loaded or pre-tensioned for further movement to operate the movable valve member. The inlet valve further includes a second actuating member pivotally movable between a contact position for inhibiting movement of the first actuating member and a release position allowing movement of the first actuating member to operate the movable valve member. When the fluid reaches a pre-set level the second actuating member triggers movement of the first actuating member to close the inlet valve.

It is an object of the present invention to provide a feed valve for a lavatory flush tank, designed to eliminate the aforementioned drawbacks of known solutions. In particular, it is an object of the invention to provide a feed valve designed to cut off water supply to the tank substantially instantaneously upon the water reaching a given level. It is a further object of the invention to provide a feed valve which is compact.

According to the present invention, there is provided a feed valve for a lavatory flush tank, as claimed in claim 1.

The first float means are therefore completely submerged before being released, and so able to provide the maximum possible thrust as soon as the water level in the tank reaches the given level. As a result, closure of the valve assembly is more or less instantaneous, the fill level of the tank is controlled accurately, and the vessel formerly housing the float means, according to the known art, is eliminated, thus simplifying the feed valve as a whole.

According to a further aspect of the invention, the feed valve comprises a locking device for locking said first float means; and control means for controlling said locking device, and which release said locking device when the water level in the tank substantially exceeds said first float means by a given amount.

Also, said control means comprise second float means substantially located at a given height with respect to said first float means, and cooperating with said locking device by means of an actuating member.

That is, the second float means provide, by means of the actuating member, for releasing the first float means when the water reaches the given level. Since the second float means are located over the first float means by a given amount equal to said given height, the first float means are obviously completely submerged and therefore able to provide the maximum thrust.

A non-limiting embodiment of the present invention will be described by way of example with reference to the accompanying drawings, in which:
Figure 1 shows a longitudinal section of a feed valve in accordance with the invention;
Figure 2 shows a larger-scale view in perspective of a detail of the Figure 1 valve.

Number 1 in the accompanying drawings indicates as a whole a feed valve for a lavatory flush tank (not shown). Feed valve 1 comprises a body 2 having an inner cavity 3 housing a known, e.g. counterpressure-type, valve assembly 4 not described in detail for the sake of simplicity. A tubular fitting 5 is connected to body 2, has an externally threaded end 6 for connection to an external feed conduit (not shown), is secured to body 2 by a ring nut 7, and may be provided inside with a noise-damping member 8.

Body 2 is also connected to a pipe 9 perpendicular to fitting 5, and along which, as is known, the water from fitting 5 and valve assembly 4 flows into the flush tank. Pipe 9 also defines a guide member 10 for a main float 11 fitted coaxially to and sliding axially along the outside of guide member 10, and connected mechanically by an adjustable rod 12 to a lever 13 controlling valve assembly 4. More specifically, adjustable rod 12 is hinged at opposite ends to main float 11 and to one end of lever 13; and lever 13 is preferably L-shaped, and comprises a shutter member 14 cooperating with a valve seat 15 of a nozzle 16 of valve assembly 4 to control opening-closing of valve assembly 4.

In the non-limiting example shown, main float 11 comprises a substantially prismatic buoyancy tank 18 having a central through seat 19 defined by a cylindrical inner lateral surface 20; and guide member 10 is inserted in axially sliding manner inside seat 19.

The outer lateral surface 21 has a succession of longitudinally spaced teeth 23 projecting radially from outer lateral surface 21 to define a number of respective seats 24 having respective downward-facing seating surfaces 25, i.e. facing a free end 26 of guide member 10.

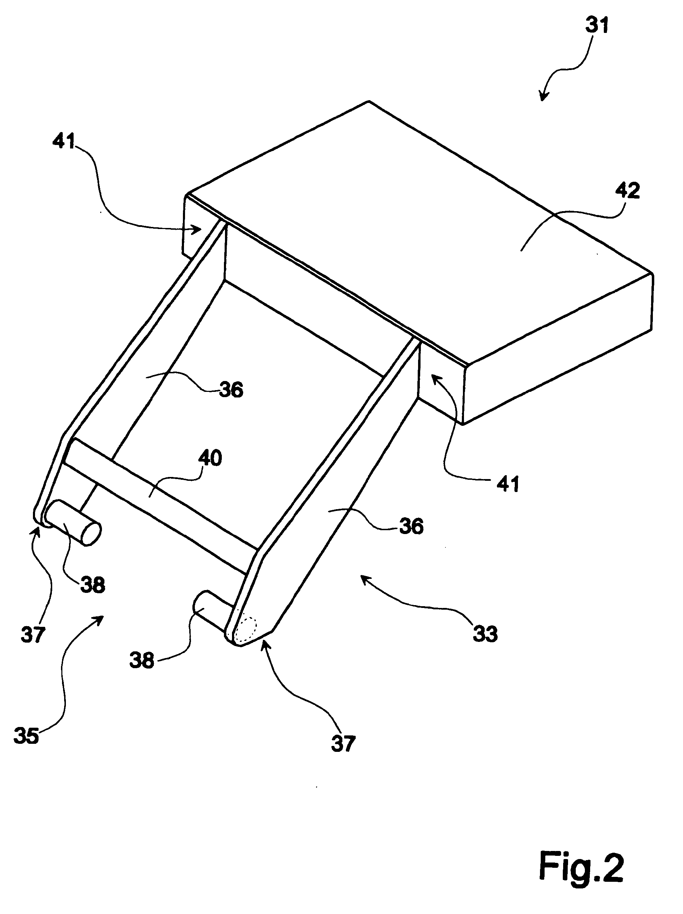

Feed valve 1 also comprises an auxiliary float 31 connected to main float 11 by a rocking member 33. More specifically (see also Figure 2), rocking member 33 comprises a fork 35 having two parallel arms 36 hinged at respective ends 37 to buoyancy tank 18 by means of respective pins 38. Ends 37 of arms 36 are connected rigidly to each other by a crossbar defining a locking member 40 for selectively engaging one of seats 24, and which rests substantially axially on seating surface 25 of seat 24.

Auxiliary float 31 is supported by and projects from respective ends 41, opposite ends 37, of arms 36, and comprises a buoyancy tank 42 (preferably, though not necessarily, smaller than buoyancy tank 18) positioned to form an obtuse angle with arms 36; and fork 35 is so designed that, when locking member 40 engages seat 24, arms 36 are inclined, and buoyancy tank 42 of auxiliary float 31 is located at a given height H with respect to a top face 43 of buoyancy tank 18 of main float 11.

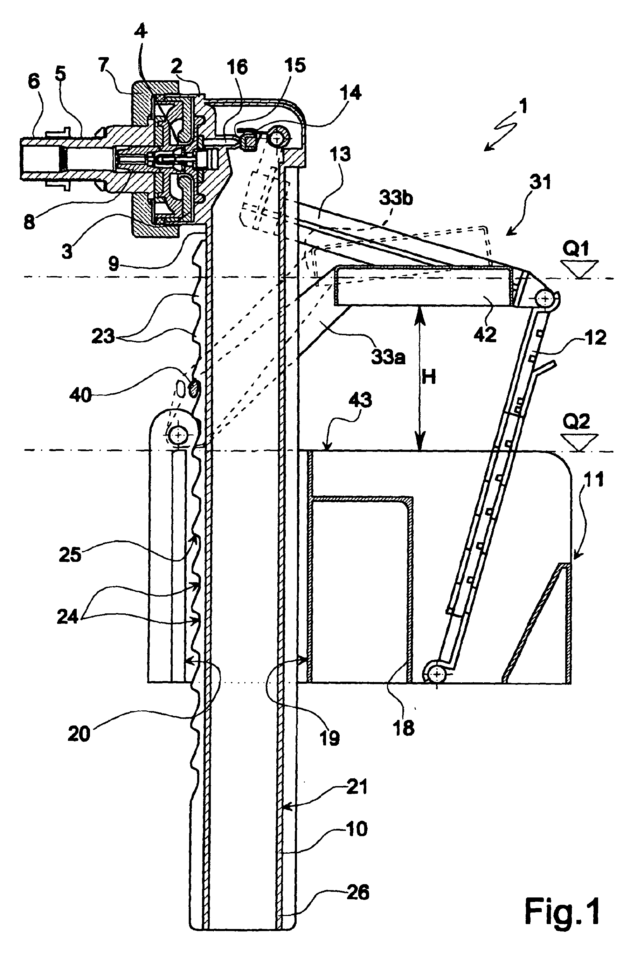

Auxiliary float 31 is so sized that rocking member 33 selectively assumes a first operating position 33a (shown by the continuous line in Figure 1), in which locking member 40 engages seat 24, when the water in the tank is below a first given level Q1, and a second operating position 33b (shown by the dash line in Figure 1), in which locking member 40 does not engage seat 24, when the water in the tank reaches or exceeds first level Q1. Auxiliary float 31 thus moves locking member 40 (by rotating rocking member 33) to alternately lock and release main float 11 and guide member 10 (i.e. main float 11 and body 2) with respect to each other as the water level inside the tank varies. Obviously, first level Q1, at which rocking member 33 is activated, is higher than a second level Q2 corresponding with the top face 43 of buoyancy tank 18 of main float 11.

In other words, guide member 10, seats 24, and locking member 40 form a locking device for locking main float 11 below first level Q1, and so preventing it from sliding axially along guide member 10, when the water in the tank is below first level Q1; and auxiliary float 31 and arms 36 of rocking member 33 form a control mechanism for controlling the locking device, and which releases locking member 40 from relative seat 24, thus releasing main float 11, when the water in the tank reaches first level Q1.

In other words, the control mechanism intervenes when the water level exceeds main float 11 by an amount Q1-Q2 substantially equal to height H; and rod 12, lever 13, and rocking member 33 are so formed that valve assembly 4 is closed when the top face 43 of main float 11 is at an intermediate level between first level Q1 and second level Q2, i.e. before main float 11 emerges.

The following is a more detailed description of the operation of feed valve 1.

When the tank is empty (i.e. when all the water has been drained out of the tank), main float 11, not buoyed up by the water, exerts its weight on rod 12, which, by means of lever 13, keeps shutter member 14 detached from valve seat 15, so that nozzle 16 is open, and water from the mains flows into the tank through valve assembly 4 (which operates in known manner not described for the sake of simplicity). Auxiliary float 31, also not buoyed up by the water, exerts its weight on rocking member 33 to keep rocking member 33 in the first operating position 33a, in which locking member 40 engages seat 24 and rests axially upwards on seating surface 25, so that main float 11 is secured axially to guide member 10 and locked below first level Q1.

As the tank fills up, the water level first reaches main float 11, which, being secured axially to guide member 10, is prevented from sliding upwards along guide member 10, and remains locked below first level Q1, so that valve assembly 4 remains open, and water continues to flow into the tank. When the water in the tank eventually reaches auxiliary float 31, i.e. first given level Q1 at which rocking member 33 is rotated, the hydrostatic thrust exerted by the water on auxiliary float 31 rotates rocking member 33 into the second operating position 33b, in which locking member 40 does not engage seat 24, so that main float 11 is released and slides along guide member 10 to close valve assembly 4 and cut off the flow of water into the tank. Main float 11, being completely submerged when released, is therefore able to immediately provide the maximum possible thrust, which moreover remains constant, on account of valve assembly 4 being closed before the top face 43 of main float 11 reaches first level Q1, i.e. before main float 11 begins to emerge. Consequently, valve assembly 4 is closed accurately and more or less instantaneously.

Clearly, changes may be made to the feed valve as described and illustrated herein without, however, departing from the scope of the present invention as defined by the claims.

## Claims

1. A feed valve (1) for a lavatory flush tank, comprising a body (2) housing a valve assembly (4), the feed valve furthermore comprising first float means (11) and a locking device (10, 24, 40), said first float means and said locking device being movable with respect to said body and connected to a shutter member (14) of said valve assembly to control opening and closing of the valve assembly (4); said first float means (11) being houseable directly inside the tank, the feed valve (1) being **characterized in that** said locking device (10, 24, 40) selectively locks said first float means (11) whilst said first float means (11) are located completely below a given level (Q1), as long as the water level inside the tank is below said given level (Q1), and releases said first float means (11) when the water level substantially equals said given level (Q1).

2. A feed valve as claimed in Claim 1, **characterized in that** said locking device (10, 24, 40) comprises control means (31, 36), for releasing said locking device (10, 24, 40) when the water level in the tank substantially exceeds said first float means (11) by a given amount (Q1-Q2).

3. A feed valve as claimed in Claim 2, **characterized in that** said locking device (10, 24, 40) comprises a guide member (10) integral with said body (2) and having a number of seats (24); and a locking member (40) carried by said first float means (11) and for selectively engaging one of said seats (24).

4. A feed valve as claimed in Claim 3, **characterized in that** said first float means (11) comprise a main float axially slidable along said guide member (10).

5. A feed valve as claimed in Claim 3 or 4, **characterized in that** said control means (31, 36) comprise second float means (31) located substantially at a predetermined height (H) with respect to said first float means (11), and cooperating with said locking device (10, 24, 40) by means of an actuating member (36).

6. A feed valve as claimed in Claim 5, **characterized in that** said predetermined height (H) substantially equals said amount (Q1-Q2).

7. A feed valve as claimed in Claim 5 or 6, **characterized in that** said second float means (31) and said actuating member (36) are carried by said first float means (11).

8. A feed valve as claimed in any one of Claims 5 to 7, **characterized in that** said actuating member (36) comprises at least one arm having a first end (37) hinged to said first float means (11), and a second end (41) connected to said second float means (31).

9. A feed valve as claimed in Claim 8, **characterized in that** said locking member (40) comprises a bar carried by and crosswise to said arm

10. A feed valve as claimed in Claim 9, **characterized in that** said second float means (31) comprise an auxiliary float carried by and projecting from said arm.

## Patentansprüche

1. Einlass- bzw. Zulaufventil (1) für einen Toilettenspülkasten, umfassend einen Körper (2), der eine Ventilanordnung (4) aufnimmt, wobei das Zulaufventil ferner erste Schwimmermittel (11) und eine Verriegelungsvorrichtung (10, 24, 40) umfasst, wobei die ersten Schwimmermittel und die Verriegelungsvorrichtung bezüglich dem Körper beweglich sind und mit einem Verschlussglied (14) der Ventilanordnung verbunden sind, um ein Öffnen und Schließen der Ventilanordnung (4) zu steuern; wobei die ersten Schwimmermittel (11) direkt in dem Tank aufnehmbar sind, wobei das Zulaufventil (1) **dadurch gekennzeichnet ist, dass** die Verriegelungsvorrichtung (10, 24, 40) selektiv die ersten Schwimmermittel (11) verriegelt, während sich die ersten Schwimmermittel (11) vollständig unterhalb eines gegebenen Pegels (Q1) befinden, so lange der Wasserpegel in dem Tank unterhalb des gegebenen Pegels (Q1) ist, und die ersten Schwimmermittel (11) freigibt, wenn der Wasserpegel im Wesentlichen gleich dem gegebenen Pegel (Q1) ist.

2. Zulaufventil nach Anspruch 1, **dadurch gekennzeichnet, dass** die Verriegelungsvorrichtung (10, 24, 40) Steuermittel (31, 36) umfasst, um die Verriegelungsvorrichtung (10, 24, 40) freizugeben, wenn der Wasserpegel in dem Tank die ersten Schwimmermittel (11) im Wesentlichen um einen gegebene Betrag (Q1-Q2) übersteigt.

3. Zulaufventil nach Anspruch 2, **dadurch gekennzeichnet, dass** die Verriegelungsvorrichtung (10, 24, 40) ein Führungsglied (10), das integral mit dem Körper (2) ist und eine Anzahl von Sitzen (24) aufweist; und ein Verriegelungsglied (40) umfasst, das durch die ersten Schwimmermittel (11) getragen ist und selektiv in einen der Sitze (24) eingreift.

4. Zulaufventil nach Anspruch 3, **dadurch gekennzeichnet, dass** die ersten Schwimmermittel (11) einen Hauptschwimmer bzw. -schwimmkörper umfassen, der axial entlang dem Führungsglied (10) verschiebbar ist.

5. Zulaufventil nach Anspruch 3 oder 4, **dadurch gekennzeichnet, dass** die Steuermittel (31, 36) zweite Schwimmermittel (31) umfassen, die im Wesentlichen auf einer vorbestimmten Höhe (H) bezüglich der ersten Schwimmermittel (11) angeordnet sind und mittels eines Betätigungsglieds (36) mit der Verriegelungsvorrichtung (10, 24, 40) zusammenwirken.

6. Zulaufventil nach Anspruch 5, **dadurch gekennzeichnet, dass** die vorbestimmte Höhe (H) im Wesentlichen gleich dem Betrag (Q1-Q2) ist.

7. Zulaufventil nach Anspruch 5 oder 6, **dadurch gekennzeichnet, dass** die zweiten Schwimmermittel (31) und das Betätigungsglied (36) durch die ersten Schwimmermittel (11) getragen sind.

8. Zulaufventil nach einem der Ansprüche 5 bis 7, **dadurch gekennzeichnet, dass** das Betätigungsglied (36) wenigstens einen Arm umfasst, der ein erstes Ende (37), das an die ersten Schwimmermittel (11) angelenkt ist, und ein zweites Ende (41) aufweist, das mit den zweiten Schwimmermitteln (31) verbunden ist.

9. Zulaufventil nach Anspruch 8, **dadurch gekennzeichnet, dass** das Verriegelungsglied (40) eine Stange umfasst, die quer zu dem Arm ist und durch diesen getragen ist.

10. Zulaufventil nach Anspruch 9, **dadurch gekennzeichnet, dass** die zweiten Schwimmermittel (31) einen Hilfsschwimmer bzw. -schwimmkörper umfassen, der durch den Arm getragen ist und von diesem absteht.

## Revendications

1. Soupape d'alimentation (1) pour réservoir de chasse d'eau, comprenant un corps de soupape (2) logeant un ensemble de soupape (4), la soupape d'alimentation comprenant en outre de premiers moyens de flotteur (11) et un dispositif de verrouillage (10, 24, 40), lesdits premiers moyens de flotteur et ledit dispositif de verrouillage pouvant se déplacer par rapport au dit corps et étant reliés à un élément de clapet (14) dudit ensemble de soupape pour commander l'ouverture et la fermeture de l'ensemble de soupape (4), lesdits premiers moyens de flotteur (11) pouvant être directement logés à l'intérieur du réservoir, la soupape d'alimentation (1) étant **caractérisée en ce que** ledit dispositif de verrouillage (10, 24, 40) verrouille sélectivement lesdits premiers moyens de flotteur (11) cependant que lesdits premiers moyens de flotteur (11) sont entièrement positionnés en dessous d'un niveau donné (Q1), tant que le niveau d'eau à l'intérieur du réservoir est inférieur au dit niveau donné (Q1), et il libère lesdits premiers moyens de flotteur (11) lorsque le niveau d'eau est sensiblement égal au dit niveau donné (Q1).

2. Soupape d'alimentation selon la revendication 1, **caractérisée en ce que** ledit dispositif de verrouillage (10, 24, 40) comprend des moyens de commande (31, 36) destinés à libérer ledit dispositif de verrouillage (10, 24, 40) lorsque le niveau d'eau dans le réservoir dépasse sensiblement lesdits premiers moyens de flotteur (11) selon une quantité donnée (Q1-Q2).

3. Soupape d'alimentation selon la revendication 2, **caractérisée en ce que** ledit dispositif de verrouillage (10, 24, 40) comprend un élément de guidage (10) solidaire dudit corps (2) et ayant un certain nombre d'assises (24) ; et un élément de verrouillage (40) supporté par lesdits premiers moyens de flotteur (11) et pour engager sélectivement une desdites assises (24).

4. Soupape d'alimentation selon la revendication 3, **caractérisée en ce que** lesdits premiers moyens de flotteur (11) comprennent un flotteur principal pouvant coulisser axialement le long dudit élément de guidage (10).

5. Soupape d'alimentation selon la revendication 3 ou 4, **caractérisée en ce que** lesdits moyens de commande (31, 36) comprennent de seconds moyens de flotteur (31) positionnés sensiblement à une hauteur prédéterminée (H) par rapport aux dits premiers moyens de flotteur (11) et coopérant avec ledit dispositif de verrouillage (10, 24, 40) au moyen d'un élément d'actionnement (36).

6. Soupape d'alimentation selon la revendication 5, **caractérisée en ce que** ladite hauteur prédéterminée (H) est sensiblement égale à ladite quantité (Q1-Q2).

7. Soupape d'alimentation selon la revendication 5 ou 6, **caractérisée en ce que** lesdits seconds moyens de flotteur (31) et ledit élément d'actionnement (36) sont supportés par lesdits premiers moyens de flotteur (11).

8. Soupape d'alimentation selon l'une quelconque des revendications 5 à 7, **caractérisée en ce que** ledit élément d'actionnement (36) comprend au moins un bras ayant une première extrémité (37) articulée sur lesdits premiers moyens de flotteur (11), et une seconde extrémité (41) raccordée aux dits seconds moyens de flotteur (31).

9. Soupape d'alimentation selon la revendication 8, **caractérisée en ce que** ledit élément de verrouillage (40) comprend une barre supportée par et transversale au dit bras.

10. Soupape d'alimentation selon la revendication 9, **caractérisée en ce que** lesdits seconds moyens de flotteur (31) comprennent un flotteur auxiliaire supporté par et faisant saillie depuis ledit bras.
